# EUROPEAN PATENT APPLICATION

(11) **EP 4 458 892 A1**
(43) Date of publication of application: **06.11.2024**
(21) Application number: 22915969.4
(22) Date of filing: 23.12.2022
(51) Int. Cl.: C08J 9/04, C08F 293/00, C08L 53/02

(54) **FOAM BODY AND BUFFER MATERIAL**

(30) Priority: 27.12.2021 JP 2021212521
(71) Applicant: Zeon Corporation, Tokyo 100-8246 (JP)
(72) Inventor: KATO, Daisuke, Tokyo 100-8246 (JP)
(74) Representative: Kraus & Lederer PartGmbB
(86) International application number: PCT/JP2022/047710
(87) International publication number: WO 2023/127746

(57) **Abstract**

Provided is a foam body in which a hydrogenated block copolymer composition containing a hydrogenated block copolymer A represented by a specific General Formula (A) and a hydrogenated block copolymer B represented by a specific General Formula (B) is foamed, wherein the weight ratio (A/B) of the hydrogenated block copolymer A to the hydrogenated block copolymer B is 10/90 to 80/20, and the hydrogenation ratio of olefins in the polymer components constituting the hydrogenated block copolymer composition is 10 to 100%.

## Description

### TECHNICAL FIELD

The present invention relates to a foam body, and more specifically relates to a foam body having low initial elastic modulus and excellent cushioning properties.

### BACKGROUND ART

Foam bodies formed of various polymers are used as cushioning materials. In cushioning applications, excellent cushioning properties are required. On the other hand, in applications to shoe sole members or cushioning materials for batteries, for example, low initial elastic modulus is also required because lower repulsion in infinitesimal deformation region at initial deformation is preferred.

For example, Patent Document 1 describes a block copolymer hydrogenate, which is a hydrogenate of a block copolymer having a polymer block (A) containing a structural unit derived from an aromatic vinyl compound in an amount of more than 70 mol%, and a polymer block (B) containing a structural unit derived from a conjugated diene compound in an amount of 30 mol% or more, and further satisfies the following requirements:
Requirement (1): The content of the polymer block (A) in the block copolymer hydrogenate is from 1 to 30% by mass;
Requirement (2): The conjugated diene compound contains isoprene;
Requirement (3): A total content of the 1,2-bond unit and the 3,4-bond unit in the structural units derived from the conjugated diene compound is 60 mol% or more;
Requirement (4): The hydrogenation rate of the polymer block (B) is 60 mol% or more; and
Requirement (5): The block copolymer hydrogenate has a serial temperature range where tan δ, as measured according to JIS K7244-10(2005) and under the conditions of a strain of 0.1%, a frequency of 1 Hz, a measurement temperature of -70 to 100°C and a rate of temperature increase of 3°C/min, is 1.0 or more, and the maximum width of the temperature range is 16°C or more.

Patent document 1 also describes a shoe sole material containing a resin composition of the block copolymer hydrogenate. However, the foam body obtained using the resin composition of the block copolymer hydrogenate could not achieve both low initial elastic modulus and excellent cushioning properties.

### RELATED ART DOCUMENT

### PATENT DOCUMENT

Patent Document 1: WO 2019/103047

### SUMMARY OF THE INVENTION

### PROBLEMS TO BE SOLVED BY THE INVENTION

An object of the present invention is to provide a foam body having low initial elastic modulus and excellent cushioning properties.

### MEANS FOR SOLVING PROBLEMS

The present inventors, who have conducted research to achieve the above object, have found that both low initial elastic modulus and excellent cushioning properties are ensured by a foam body in which a hydrogenated block copolymer composition containing a hydrogenated block copolymer A represented by a specific General Formula (A) and a hydrogenated block copolymer B represented by a specific General Formula (B) is foamed, wherein the weight ratio of the hydrogenated block copolymer A to the hydrogenated block copolymer B is within a specific range, and the hydrogenation ratio of olefins in the polymer components constituting the hydrogenated block copolymer composition is within a specific range. With this finding, the present inventors completed the present invention.

In other words, the present invention provides a foam body in which a hydrogenated block copolymer composition containing a hydrogenated block copolymer A represented by General Formula (A) and a hydrogenated block copolymer B represented by General Formula (B) is foamed,
wherein the weight ratio (A/B) of the hydrogenated block copolymer A to the hydrogenated block copolymer B is 10/90 to 80/20, and
the hydrogenation ratio of olefins in the polymer components constituting the hydrogenated block copolymer composition is 10 to 100%:

   Ar1^{a}-HD^{a}-Ar2^{a} (A)

   Ar1^{b}-HD^{b}-Ar2^{b} (B)

   wherein in General Formulae (A) and (B), Ar1^{a}, Ar2^{a}, Ar1^{b}, and Ar2^{b} are each an aromatic vinyl polymer block, HD^{a} and HD^{b} are each a hydrogenated polymer block of a conjugated diene polymer, the ratio (Mw(Ar2^{a})/Mw(Ar1^{a})) of the weight average molecular weight of Ar2^{a} (Mw(Ar2^{a})) to the weight average molecular weight of Ar1^{a} (Mw(Ar1^{a})) is 2.6 to 66, and the ratio (Mw(Ar2^{b})/Mw(Ar1^{b})) of the weight average molecular weight of Ar2^{b} (Mw(Ar2^{b})) to the weight average molecular weight of Ar1^{b} (Mw(Ar1^{b})) is 0.95 to 1.05.

In the foam body according to the present invention, the proportion of aromatic vinyl monomer units in the total repeating units of the polymer components constituting the hydrogenated block copolymer composition is preferably 10 to 75% by weight.

In the foam body according to the present invention, HD^{a} and HD^{b} in General Formula (A) and General Formula (B) above each preferably have a vinyl bond content of 1 to 80 mol%.

In the foam body according to the present invention, Ar1^{a}, Ar1^{b}, and Ar2^{b} in General Formula (A) and General Formula (B) above each preferably have a weight average molecular weight in the range of 2,000 to 40,000, and HD^{a} and HD^{b} each preferably have a weight average molecular weight in the range of 10,000 to 300,000.

In the foam body according to the present invention, the total weight proportion of the hydrogenated block copolymer A and the hydrogenated block copolymer B in the polymer components constituting the hydrogenated block copolymer composition is preferably 30 to 100% by weight.

In the foam body according to the present invention, the weight average molecular weight of the total polymer components constituting the hydrogenated block copolymer composition is preferably 30,000 to 400,000.

The foam body according to the present invention preferably has an apparent density of 0.1 to 0.7 g/cm³.

The present invention also provides cushioning materials containing the foam body described above.

### EFFECTS OF THE INVENTION

The present invention can provide a foam body having low initial elastic modulus and excellent cushioning properties.

### DESCRIPTION OF EMBODIMENTS

### <Foam body>

The foam body according to the present invention is a material in which a hydrogenated block copolymer composition comprising a hydrogenated block copolymer A represented by General Formula (A) described later and a hydrogenated block copolymer B represented by General Formula (B) described later is foamed.

### (Hydrogenated block copolymer composition)

The hydrogenated block copolymer composition used in the present invention comprises a hydrogenated block copolymer A represented by General Formula (A) below and a hydrogenated block copolymer B represented by General Formula (B) below.

Ar1^{a}-HD^{a}-Ar2^{a} (A)

Ar1^{b}-HD^{b}-Ar2^{b} (B)

In General Formula (A) above, Ar1^{a} and Ar2^{a} are each an aromatic vinyl polymer block, and the ratio (Mw(Ar2^{a})/Mw(Ar1^{a})) of the weight average molecular weight of Ar2^{a} (Mw(Ar2^{a})) to the weight average molecular weight of Ar1^{a} (Mw(Ar1^{a})) is 2.6 to 66. HD^{a} is a hydrogenated polymer block of a conjugated diene polymer.

In General Formula (B) above, Ar1^{b} and Ar2^{b} are each an aromatic vinyl polymer block, and the ratio (Mw(Ar2^{b})/Mw(Ar1^{b})) of the weight average molecular weight of Ar2^{b} (Mw(Ar2^{b})) to the weight average molecular weight of Ar1^{b} (Mw(Ar1^{b})) is 0.95 to 1.05. HD^{b} is a hydrogenated polymer block of a conjugated diene polymer.

The aromatic vinyl polymer blocks Ar1^{a}, Ar2^{a}, Ar1^{b}, and Ar2^{b} of the hydrogenated block copolymer A and the hydrogenated block copolymer B are polymer blocks comprising aromatic vinyl monomer units.

The aromatic vinyl monomer used to form aromatic vinyl monomer units can be any aromatic vinyl compound without limitation. Examples of aromatic vinyl compounds include styrene; styrenes substituted by an alkyl group, such as α-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, and 5-t-butyl-2-methylstyrene; styrenes substituted by a halogen atom, such as 2-chlorostyrene, 3-chlorostyrene, 4-chlorostyrene, 4-bromostyrene, 2-methyl-4,6-dichlorostyrene, and 2,4-dibromostyrene; vinyl naphthalene; and the like. Among these, preferred is use of styrene. For each of the aromatic vinyl polymer blocks, these aromatic vinyl monomers can be used alone or in combination. For the aromatic vinyl polymer blocks, the same aromatic vinyl monomer may be used, or different aromatic vinyl monomers may be used. The content of the aromatic vinyl monomer units in each aromatic vinyl polymer block is preferably 80% by weight or more, more preferably 90% by weight or more, particularly preferably substantially 100% by weight in the total aromatic vinyl polymer blocks.

In the hydrogenated block copolymer A and the hydrogenated block copolymer B, the aromatic vinyl polymer blocks Ar1^{a}, Ar2^{a}, Ar1^{b}, and Ar2^{b} may contain monomer units other than the aromatic vinyl monomer units. Examples of the monomer units other than the aromatic vinyl monomer units include conjugated diene monomers such as 1,3-butadiene and isoprene (2-methyl-1,3-butadiene); α,β-unsaturated nitrile monomers; unsaturated carboxylic acid monomers or acid anhydride monomers thereof; unsaturated carboxylic acid ester monomers; non-conjugated diene monomers; and the like.

The content of the monomer units other than the aromatic vinyl monomer units in each aromatic vinyl polymer block is preferably 20% by weight or less, more preferably 10% by weight or less, particularly preferably substantially 0% by weight in the total aromatic vinyl polymer blocks.

The hydrogenated polymer blocks HD^{a} and HD^{b} of the conjugated diene polymers in the hydrogenated block copolymer A and the hydrogenated block copolymer B, respectively, are polymer blocks comprising conjugated diene monomer units, where at least part of the conjugated diene monomer units in the polymer blocks is hydrogenated.

The conjugated diene monomer used to form the conjugated diene monomer units can be any conjugated diene compound. Examples of the conjugated diene compound include 1,3-butadiene, isoprene, 2,3-dimethyl-1,3-butadiene, 2-chloro-1,3-butadiene, 1,3-pentadiene, 1,3-hexadiene, and the like. Among these, preferred is use of 1,3-butadiene and/or isoprene, and particularly preferred is use of isoprene from the viewpoint of reactivity in polymerization reaction. For each of the hydrogenated polymer blocks, these conjugated diene monomers can be used alone or in combination. For the hydrogenated polymer blocks, the same conjugated diene monomer may be used, or different conjugated diene monomers can be used. The content of the conjugated diene monomer units (including hydrogenated conjugated diene monomer units) in each hydrogenated polymer block is preferably 80% by weight or more, more preferably 90% by weight or more, particularly preferably substantially 100% by weight in the total conjugated diene polymer blocks.

The hydrogenated polymer blocks HD^{a} and HD^{b} of the conjugated diene polymers in the hydrogenated block copolymer A and the hydrogenated block copolymer B, respectively, may contain monomer units other than the conjugated diene monomer units. Examples of monomers which can form the monomer units other than the conjugated diene monomer units include aromatic vinyl monomers such as styrene and α-methylstyrene; α,β-unsaturated nitrile monomers; unsaturated carboxylic acid monomers or acid anhydride monomers thereof; unsaturated carboxylic acid ester monomers; non-conjugated diene monomers; and the like.

The content of the monomer units other than the conjugated diene monomer units (including hydrogenated conjugated diene monomer units) in each hydrogenated polymer block is preferably 20% by weight or less, more preferably 10% by weight or less, particularly preferably substantially 0% by weight in the total conjugated diene polymer blocks.

With respect to the hydrogenated block copolymer A in the hydrogenated block copolymer composition, the ratio (Mw(Ar2^{a})/Mw(Ar1^{a}) of the weight average molecular weight of Ar2^{a} (Mw(Ar2^{a})) to the weight average molecular weight of Ar1^{a} (Mw(Ar1^{a})) is in the range of 2.6 to 66. This means that the hydrogenated block copolymer A is a hydride of an asymmetric aromatic vinyl-conjugated diene-aromatic vinyl block copolymer composed of a sequence of the aromatic vinyl polymer block Ar1^{a} having a relatively small weight average molecular weight, the hydrogenated polymer block HD^{a} of the conjugated diene polymer, and the aromatic vinyl polymer block Ar2^{a} having a relatively large weight average molecular weight in this order.

In the hydrogenated block copolymer A, Mw(Ar2^{a})/Mw(Ar1^{a}) is in the range of 2.6 to 66. When Mw(Ar2^{a})/Mw(Ar1^{a}) is excessively small or excessively large, it is difficult to ensure both low initial elastic modulus and excellent cushioning properties in the foam body. Mw(Ar2^{a})/Mw(Ar1^{a}) is preferably in the range of 3 to 60, more preferably in the range of 3.5 to 50, still more preferably in the range of 4 to 40, particularly preferably in the range of 4.5 to 35. With this range of Mw(Ar2^{a})/Mw(Ar1^{a}), both low initial elastic modulus and excellent cushioning properties can be ensured at higher levels in the foam body. In the present invention, the weight average molecular weight (Mw) or the number average molecular weight (Mn) of the polymer or the polymer block is determined as a value against polystyrene standards in the measurement by high performance liquid chromatography.

The weight average molecular weight (Mw(Ar1^{a})) of the aromatic vinyl polymer block Ar1^{a} having a relatively small weight average molecular weight, which is a constituent of the hydrogenated block copolymer A, is preferably 2,000 to 40,000, more preferably 2,500 to 30,000, further more preferably 3,000 to 10,000.

The weight average molecular weight (Mw(Ar2^{a})) of the aromatic vinyl polymer block Ar2^{a} having a relatively larger weight average molecular weight, which is a constituent of the hydrogenated block copolymer A, is preferably 5,000 to 250,000, more preferably 8,000 to 120,000, further more preferably 10,000 to 100,000, still more preferably 10,000 to 80,000.

The weight average molecular weight (Mw(HD^{a})) of the hydrogenated polymer block HD^{a} of the conjugated diene polymer constituting the hydrogenated block copolymer A is preferably 10,000 to 300,000, more preferably 15,000 to 300,000, further preferably 15,000 to 150,000, particularly preferably 20,000 to 80,000.

The vinyl bond content (the proportion of 1,2-vinyl bonds and 3,4-vinyl bonds in the total conjugated diene monomer units) in the hydrogenated polymer block HD^{a} of the conjugated diene polymer constituting the hydrogenated block copolymer A is preferably 1 to 80 mol%, more preferably 2 to 75 mol%, further preferably 3 to 70 mol%. With this range of vinyl bond content, both low initial elastic modulus and excellent cushioning properties can be ensured at higher levels in the foam body. From the viewpoint of achieving further low initial elastic modulus, the vinyl bond content in the hydrogenated polymer block HD^{a} can be 4 to 30 mol%, 5 to 20 mol%, or 5 to 15 mol%. The vinyl bond content in the hydrogenated polymer block of the conjugated diene polymer can be determined by ¹H-NMR using deuterochloroform as a solvent.

Although not particularly limited, the content of the aromatic vinyl monomer units in the total monomer units in the hydrogenated block copolymer A is preferably 30 to 95% by weight, more preferably 35 to 90% by weight, further preferably 40 to 87% by weight, particularly preferably 43 to 85% by weight. The content of the aromatic vinyl monomer units in the total monomer units in the hydrogenated block copolymer A can be determined based on the ratio of intensities detected by the differential refractometer and the ultraviolet detector in the measurement by high performance liquid chromatography.

Although not particularly limited, the weight average molecular weight of the entire hydrogenated block copolymer A is preferably 20,000 to 500,000, more preferably 25,000 to 300,000, still more preferably 30,000 to 150,000. With the above-described preferred range of the weight average molecular weight of each of the polymer blocks constituting the hydrogenated block copolymer A (Mw(Ar1^{a}), Mw(Ar2^{a}), Mw(HD^{a})) or with the above-described preferred range of the weight average molecular weight of the entire hydrogenated block copolymer A, both low initial elastic modulus and excellent cushioning properties can be ensured at higher levels in the foam body.

The hydrogenated block copolymer B in the hydrogenated block copolymer composition is a hydride of an aromatic vinyl-conjugated diene-aromatic vinyl block copolymer composed of the conjugated diene polymer block HD^{b} and two aromatic vinyl polymer blocks, i.e., Ar1^{b} and Ar2^{b} bonded to the two terminals of the conjugated diene polymer block HD^{b}, respectively. The weight average molecular weights (Mw(Ar1^{b}), Mw(Ar2^{b})) of the two aromatic vinyl polymer blocks Ar1^{b} and Ar2^{b} constituting the hydrogenated block copolymer B are such that the ratio (Mw(Ar2^{b})/Mw(Ar1^{b})) of the weight average molecular weight of Ar2^{b} (Mw(Ar2^{b})) to the weight average molecular weight of Ar1^{b} (Mw(Ar1^{b})) is 0.95 to 1.05.

The weight average molecular weights (Mw(Ar1^{b}), Mw(Ar2^{b})) of the two aromatic vinyl polymer blocks Ar1^{b} and Ar2^{b} constituting the hydrogenated block copolymer B are each preferably 2,000 to 40,000, more preferably 2,500 to 30,000, further preferably 3,000 to 10,000. The weight average molecular weights (Mw(Ar1^{b}), Mw(Ar2^{b})) of the two aromatic vinyl polymer blocks Ar1^{b} and Ar2^{b} may be equal or may be different. Preferably, their weight average molecular weights are substantially equal. For example, although what is needed is that the ratio (Mw(Ar2^{b})/Mw(Ar1^{b})) of the weight average molecular weight (Mw(Ar2^{b})) of Ar2^{b} to the weight average molecular weight (Mw(Ar1^{b})) of Ar1^{b} is within the range of 0.95 to 1.05, the ratio (Mw(Ar2^{b})/Mw(Ar1^{b})) is preferably in the range of 0.97 to 1.03.

In addition, the weight average molecular weight (Mw(Ar1^{b}), Mw(Ar2^{b})) of at least one of these two aromatic vinyl polymer blocks Ar1^{b} and Ar2^{b} may be equal or different, but is preferably substantially equal, to the weight average molecular weight (Mw(Ar1^{a})) of the aromatic vinyl polymer block Ar1^{a} having a relatively small weight average molecular weight, which is a constituent of the hydrogenated block copolymer A. For example, the ratio (Mw(Ar1^{b})/Mw(Ar1^{a})) of the weight average molecular weight (Mw(Ar1^{b})) of Ar1^{b} to the weight average molecular weight (Mw(Ar1^{a})) of Ar1^{a} may be in the range of 0.9 to 2.2, or the ratio (Mw(Ar2^{b})/Mw(Ar1^{a})) of the weight average molecular weight (Mw(Ar2^{b})) of Ar2^{b} to the weight average molecular weight (Mw(Ar1^{a})) of Ar1^{a} may be in the range of 0.9 to 2.2. Further, for example, preferably, the ratio (Mw(Ar1^{b})/Mw(Ar1^{a})) of the weight average molecular weight (Mw(Ar1^{b})) of Ar1^{b} to the weight average molecular weight (Mw(Ar1^{a})) of Ar1^{a} is in the range of 0.95 to 1.05, or the ratio (Mw(Ar2^{b})/Mw(Ar1^{a})) of the weight average molecular weight (Mw(Ar2^{b})) of Ar2^{b} to the weight average molecular weight (Mw(Ar1^{a})) of Ar1^{a} is in the range of 0.95 to 1.05.

The weight average molecular weight (Mw(HD^{b})) of the hydrogenated polymer block HD^{b} of the conjugated diene polymer constituting the hydrogenated block copolymer B is preferably 10,000 to 300,000, more preferably 15,000 to 300,000, further preferably 15,000 to 150,000, particularly preferably 20,000 to 80,000.

The vinyl bond content (the proportion of 1,2-vinyl bonds and 3,4-vinyl bonds in the total conjugated diene monomer units) in the hydrogenated polymer block HD^{b} of the conjugated diene polymer constituting the hydrogenated block copolymer B is preferably 1 to 80 mol%, more preferably 2 to 75 mol%, further preferably 3 to 70 mol%. With this range of vinyl bond content, both low initial elastic modulus and excellent cushioning properties can be ensured at higher levels in the foam body. From the viewpoint of achieving further low initial elastic modulus, the vinyl bond content in the hydrogenated polymer block HD^{b} can be 4 to 30 mol%, 5 to 20 mol%, or 5 to 15 mol%. The vinyl bond content in the hydrogenated polymer block of the conjugated diene polymer can be determined by ¹H-NMR using deuterochloroform as a solvent. Preferably, the vinyl bond content in the hydrogenated polymer block HD^{b} of the conjugated diene polymer constituting the hydrogenated block copolymer B is substantially equal to the vinyl bond content in the hydrogenated polymer block HD^{a} of the conjugated diene polymer constituting the hydrogenated block copolymer A. For example, the ratio of the vinyl bond content in the hydrogenated polymer block HD^{b} of the conjugated diene polymer constituting the hydrogenated block copolymer B to the vinyl bond content in the hydrogenated polymer block HD^{a} of the conjugated diene polymer constituting the hydrogenated block copolymer A is preferably in the range of 0.95 to 1.05.

If the hydrogenated block copolymer composition used in the present invention is produced by a production method using a coupling agent, such as a method for producing the hydrogenated block copolymer composition, comprising steps (1a) to (6a) described later, the hydrogenated polymer block HD^{b} of the conjugated diene polymer constituting the hydrogenated block copolymer B may contain a residue of the coupling agent. Specifically, the hydrogenated block copolymer B may be a compound represented by the following formula:

Ar1^{b}-(HD^{b'}-X-HD^{b"})-Ar2^{b}

Namely, according to an embodiment, as shown in the above formula, the hydrogenated polymer block HD^{b} of the conjugated diene polymer may be composed of HD^{b'} and HD^{b"} coupled via the residue X of the coupling agent. Examples of the residue X of the coupling agent include residues of bifunctional coupling agents exemplified in the method for producing the hydrogenated block copolymer composition described later, which comprises the steps (1a) to (6a).

Although not particularly limited, the content of the aromatic vinyl monomer units in the total monomer units in the hydrogenated block copolymer B is preferably 5 to 40% by weight, more preferably 10 to 38% by weight, further preferably 15 to 35% by weight. With this range of content of the aromatic vinyl monomer units, both low initial elastic modulus and excellent cushioning properties can be ensured at higher levels in the foam body. The content of the aromatic vinyl monomer units in the total monomer units in the hydrogenated block copolymer A can be determined based on the ratio of intensities detected by the differential refractometer and the ultraviolet detector in the measurement by high performance liquid chromatography.

Although not particularly limited, the weight average molecular weight of the entire hydrogenated block copolymer B is preferably 20,000 to 200,000, more preferably 25,000 to 150,000, still more preferably 30,000 to 70,000. With the above-described preferred range of the weight average molecular weight of each of the polymer blocks constituting the hydrogenated block copolymer B (Mw(Ar1^{b}), Mw(Ar2^{b}), Mw(HD^{b})) or with the above-described preferred range of the weight average molecular weight of the entire hydrogenated block copolymer A, both low initial elastic modulus and excellent cushioning properties can be ensured at higher levels in the foam body.

Although not particularly limited, the hydrogenated block copolymer A and the hydrogenated block copolymer B constituting the hydrogenated block copolymer composition used in the present invention and the polymer blocks constituting these block copolymers each have a molecular weight distribution of preferably 1.1 or less, more preferably 1.05 or less, the molecular weight distribution being represented by the ratio [(Mw)/(Mn)] of the weight average molecular weight (Mw) to the number average molecular weight (Mn).

The weight ratio (A/B) of the hydrogenated block copolymer A to the hydrogenated block copolymer B contained in the hydrogenated block copolymer composition used in the present invention is 10/90 to 80/20. When the weight ratio (A/B) is excessively small or excessively large, it is difficult to ensure both of low initial elastic modulus and excellent cushioning properties. The weight ratio (A/B) is preferably 12/88 to 60/40, more preferably 15/85 to 50/50. With this range of weight ratio of the hydrogenated block copolymer A to the hydrogenated block copolymer B, both low initial elastic modulus and excellent cushioning properties can be ensured at higher levels in the foam body. The weight ratio (A/B) of the hydrogenated block copolymer A to the hydrogenated block copolymer B can be determined from the ratio of the areas of the peaks corresponding to the respective block copolymers in a chart obtained by high performance liquid chromatography.

The hydrogenated block copolymer composition used in the present invention may contain a polymer component other than the hydrogenated block copolymer A and the hydrogenated block copolymer B.

The total weight proportion of the hydrogenated block copolymer A and the hydrogenated block copolymer B in the polymer components constituting the hydrogenated block copolymer composition is preferably 30 to 100% by weight, more preferably 50 to 100% by weight, further more preferably 70 to 100% by weight, still more preferably 90 to 100% by weight, particularly preferably 95 to 100% by weight, most preferably substantially 100% by weight (i.e., does not contain polymer components other than the hydrogenated block copolymer A and the hydrogenated block copolymer B).

The foam body containing only elastomers as polymer components has a tendency to be excessively easily deformed, and thus tends to be inferior in cushioning properties. On the other hand, when elastomers and non-elastomeric polymers are used in combination, the excessively easy deformation of the foam body tends to be suppressed, whereas the foam body tends to have a higher initial elastic modulus.

On the contrary, the foam body according to the present invention can ensure both low initial elastic modulus and excellent cushioning properties. Specifically, the foam body according to the present invention can ensure both low initial elastic modulus and excellent cushioning properties even when the total weight proportion of the hydrogenated block copolymer A and the hydrogenated block copolymer B is relatively large as described above.

Examples of the polymer component other than the hydrogenated block copolymer A and the hydrogenated block copolymer B include aromatic vinyl-conjugated diene-aromatic vinyl block copolymers other than the hydrogenated block copolymer A and the hydrogenated block copolymer B, aromatic vinyl-conjugated diene block copolymers, aromatic vinyl homopolymers, conjugated diene homopolymers, aromatic vinyl-conjugated diene random copolymers, and branched polymers thereof; thermoplastic elastomers such as polyurethane thermoplastic elastomers, polyamide thermoplastic elastomers, and polyester thermoplastic elastomers; thermoplastic resins such as polyolefins, polyvinyl chloride, acrylonitrile-styrene copolymers, acrylonitrile-butadienestyrene copolymers, and polyphenylene ether; and the like.

In the hydrogenated block copolymer composition used in the present invention, the hydrogenation ratio of olefins in the polymer components constituting the hydrogenated block copolymer composition is in the range of 10 to 100%. Here, the hydrogenation ratio of olefins indicates the hydrogenation ratio of olefins in the total polymer components constituting the hydrogenated block copolymer composition, and specifically is the proportion (mol%) of hydrogenated ones of the total non-aromatic carbon-carbon double bonds contained in the polymer components before hydrogenation.

The hydrogenation ratio of olefins in the polymer components constituting the hydrogenated block copolymer composition used in the present invention is in the range of 10 to 100%. When the hydrogenation ratio of olefins is excessively low, the olefins can be excessively easily deformed, resulting in inferior cushioning properties. The hydrogenation ratio of olefins is preferably 20 to 100%, more preferably 30 to 100%, further more preferably 50 to 100%, particularly preferably 70 to 100%, most preferably 90 to 100%. With this range of hydrogenation ratio of olefins, both low initial elastic modulus and excellent cushioning properties can be ensured at higher levels in the foam body. The hydrogenation ratio of olefins can be determined by ¹H-NMR spectrum measurement using deuterochloroform as a solvent.

Although it is sufficient that the hydrogenation ratio of olefins is within the above range in the hydrogenated block copolymer composition used in the present invention, each of the polymer components constituting the hydrogenated block copolymer composition has an iodine value within the range of preferably 0 to 300 gI₂/100 g, more preferably 0 to 150 gI₂/100 g, further preferably 0 to 125 gI₂/100 g, further more preferably 0 to 100 gI₂/100 g, particularly preferably 0 to 75 gI₂/100 g, most preferably 0 to 30 gI₂/100 g. With this range of iodine value, both low initial elastic modulus and excellent cushioning properties can be ensured at higher levels in the foam body. The iodine value can be determined based on JIS K0070.

The proportion of aromatic vinyl monomer units in the total repeating units of the polymer components constituting the hydrogenated block copolymer composition used in the present invention (hereinafter, sometimes referred to as "the content of the total aromatic vinyl monomer units") is preferably 10 to 75% by weight, more preferably 15 to 70% by weight, further more preferably 20 to 65% by weight. With this range of content of the total aromatic vinyl monomer units, both low initial elastic modulus and excellent cushioning properties can be ensured at higher levels in the foam body. From the viewpoint of achieving further low initial elastic modulus, the content of the total aromatic vinyl monomer units can be 22 to 50% by weight, 24 to 45% by weight, or 26 to 40% by weight. The content of the total aromatic vinyl monomer units can be easily adjusted by adjusting the amounts of the hydrogenated block copolymer A, the hydrogenated block copolymer B, and the polymer component other than these which constitute the hydrogenated block copolymer composition in consideration of the contents of aromatic vinyl monomer units therein. The content of the total aromatic vinyl monomer units can be determined by ¹H-NMR measurement using deuterochloroform as a solvent.

If all the polymer components constituting the hydrogenated block copolymer composition are composed of only aromatic vinyl monomer units and conjugated diene monomer units, only the aromatic vinyl monomer units can be extracted according to the method described in Rubber Chem. Technol., 45, 1295 (1972) by subjecting the polymer components in the hydrogenated block copolymer composition to ozone decomposition, followed by reduction with lithium aluminum hydride to decompose the conjugated diene monomer units (including the hydrogenated ones). Thus, the content of the total aromatic vinyl monomer units can be readily measured. Using a similar method, the content of the aromatic vinyl monomer units and the content of the conjugated diene monomer units in each block copolymer can be determined.

Although not particularly limited, the weight average molecular weight of the total polymer components constituting the hydrogenated block copolymer composition used in the present invention is preferably 30,000 to 400,000, more preferably 35,000 to 100,000, further preferably 40,000 to 80,000.

Further, although not particularly limited, the molecular weight distribution represented by the ratio (Mw/Mn) of the weight average molecular weight (Mw) to the number average molecular weight (Mn) of the total polymer components constituting the hydrogenated block copolymer composition used in the present invention is preferably 1.01 to 10, more preferably 1.02 to 5, further preferably 1.03 to 3.

The hydrogenated block copolymer composition used in the present invention may further contain, as necessary, various additives such as an antioxidant, a foaming agent, a foaming aid, a processing aid, a filler, a pigment, an antistatic agent, a flame retardant, a water repellent, a waterproofing agent, an electric conductivity imparting agent, a thermal conductivity imparting agent, an electromagnetic wave shielding performance imparting agent, a fluorescent agent, an antibacterial agent, a photostabilizer, a UV absorbent, a dye, and a lubricant. Although not particularly limited, the content of the additives in the hydrogenated block copolymer composition can be, for example, 0 to 50% by mass, or 5 to 30% by mass.

Examples of the antioxidant include hindered phenol compounds such as pentaerythritol tetrakis[3-(3,5-di-t-butyl-4-hydroxyphenyl)propionate], 2,6-di-t-butyl-p-cresol, di-t-butyl-4-methylphenol; thiodicarboxylate esters such as dilauryl thiopropionate; phosphites such as tris(nonylphenyl) phosphite; and the like. The antioxidants can be used alone or in combination. Although not particularly limited, the content of the antioxidant in the hydrogenated block copolymer composition is preferably 10 parts by weight or less, more preferably 0.5 to 5 parts by weight relative to 100 parts by weight of the hydrogenated block copolymer composition.

### (Foam body)

The foam body according to the present invention is a foam body in which the hydrogenated block copolymer composition is foamed. In the foam body according to the present invention, a hydrogenated block copolymer composition containing the hydrogenated block copolymer A and the hydrogenated block copolymer B in a specific weight proportion and having a hydrogenation ratio of olefins within a specific range is foamed, and as a result, the foam body according to the present invention has low initial elastic modulus and excellent cushioning properties.

Although not particularly limited, the apparent density (specific gravity) of the foam body according to the present invention is preferably 0.1 to 0.7 g/cm³, more preferably 0.1 to 0.6 g/cm³, preferably 0.1 to 0.5 g/cm³, preferably 0.1 to 0.4 g/cm³. With this range of apparent density (specific gravity), both low initial elastic modulus and excellent cushioning properties can be ensured at higher levels in the foam body, and in addition, an excellent strength can also be achieved.

The foam body according to the present invention is not particularly limited as long as it has independent pores or continuous pores, and preferably has independent pores, and more preferably has independent fine pores (e.g., bubbles with a size of the order of microns) dispersed therein.

Although not particularly limited, the porosity of the foam body according to the present invention is preferably 90 to 40% by volume, more preferably 80 to 50% by volume. With the porosity of this range, both low initial elastic modulus and excellent cushioning properties can be ensured at higher levels in the foam body, and in addition, an excellent strength can also be achieved.

Although not particularly limited, the foam body according to the present invention can have various shapes depending on the applications.

### <Method for producing foam body>

The foam body according to the present invention can be produced by producing the hydrogenated block copolymer composition used in the present invention, and then foaming the hydrogenated block copolymer composition.

### (Method for producing hydrogenated block copolymer composition)

The hydrogenated block copolymer composition used in the present invention can be produced by any method; for example, the hydrogenated block copolymer composition can be produced according to a traditional method for producing a block copolymer and a traditional hydrogenation method by separately preparing the hydrogenated block copolymer A and the hydrogenated block copolymer B, optionally compounding an additional polymer component and a variety of additives, and mixing these by a normal method such as kneading or solution mixing. On the other hand, in the present invention, the method described below is suitable because the hydrogenated block copolymer composition can be produced with high productivity.

In other words, the method for producing the hydrogenated block copolymer composition used in the present invention preferably comprises steps (1) to (7) of:
(1): preparing a solution containing a terminally active aromatic vinyl polymer by polymerizing an aromatic vinyl monomer in a solvent in the presence of a polymerization initiator;
(2): preparing a solution containing a terminally active aromatic vinyl-conjugated diene block copolymer by adding a conjugated diene monomer to the solution containing a terminally active aromatic vinyl polymer prepared in the step (1), and polymerizing the conjugated diene monomer;
(3): preparing a solution containing a terminally active aromatic vinyl-conjugated diene-aromatic vinyl block copolymer by adding an aromatic vinyl monomer to the solution containing a terminally active aromatic vinyl-conjugated diene block copolymer prepared in the step (2), and polymerizing the aromatic vinyl monomer;
(4): preparing a solution containing a block copolymer B' by adding a polymerization terminator to the solution containing a terminally active aromatic vinyl-conjugated diene-aromatic vinyl block copolymer, which is prepared in the step (3), in an amount of less than 1 molar equivalent relative to the active terminal of the terminally active aromatic vinyl-conjugated diene-aromatic vinyl block copolymer to deactivate a portion of the active terminal;
(5): preparing a solution containing the block copolymer B' and a block copolymer A' by adding an aromatic vinyl monomer to the solution containing the block copolymer B' prepared in the step (4), and polymerizing the aromatic vinyl monomer;
(6): preparing a solution containing a hydrogenated block copolymer B and a hydrogenated block copolymer A by hydrogenating the solution containing the block copolymer B' and the block copolymer A' prepared in the step (5); and
(7): recovering a hydrogenated block copolymer composition from the solution containing the hydrogenated block copolymer B and the hydrogenated block copolymer A prepared in the step (6).

### <Step (1)>

In this method for producing a hydrogenated block copolymer composition, first, in the step (1), a solution containing a terminally active aromatic vinyl polymer is prepared by polymerizing an aromatic vinyl monomer in a solvent in the presence of a polymerization initiator.

As the polymerization initiator, a polymerization initiator known to have anionic polymerization activity to aromatic vinyl monomers and conjugated diene monomers can be used. Examples of the polymerization initiator include organic alkali metal compounds, organic alkaline earth compounds, organic lanthanoid rare earth metal compounds, and the like.

For the organic alkali metal compounds, particularly suitably used are organic lithium compounds having one or more lithium atoms in the molecule. Specific examples of the organic alkali metal compounds include organic monolithium compounds such as ethyllithium, n-propyllithium, isopropyllithium, n-butyllithium, sec-butyllithium, t-butyllithium, hexyllithium, phenyllithium, stilbenelithium, dialkylaminolithium compounds, diphenyl amino lithium, and ditrimethylsilylaminolithium; organic dilithium compounds such as methylenedilithium, tetramethylenedilithium, hexamethylenedilithium, isoprenyldilithium, and 1,4-dilithio-ethylcyclohexane; organic trilithium compounds such as 1,3,5-trilithiobenzene; and the like. Among these, organic monolithium compounds are particularly suitably used.

Examples of the organic alkaline earth metal compounds include n-butylmagnesium bromide, n-hexylmagnesium bromide, ethoxycalcium, calcium stearate, t-butoxystrontium, ethoxybarium, isopropoxybarium, ethylmercaptobarium, t-butoxybarium, phenoxybarium, diethylaminobarium, barium stearate, ethylbarium, and the like.

Besides, those which form a homogeneous system in an organic solvent to have living polymerizability can also be used, for example, composite catalysts composed of lanthanoid rare earth metal compounds (including neodymium, samarium, gadolinium, and the like)/alkylaluminum/alkylaluminum halide/alkylaluminum hydride, or metallocene catalysts containing titanium, vanadium, samarium, gadolinium, or the like.

These polymerization initiators may be used alone or in combination as a mixture. The amount of the polymerization initiator to be used may be determined according to the target molecular weight of each block copolymer and is not particularly limited. The amount thereof is preferably 0.01 to 20 mmol, more preferably 0.05 to 15 mmol, still more preferably 0.1 to 10 mmol per 100 g of the total monomers to be used in polymerization.

The solvent used in polymerization can be any solvent inactive to the polymerization initiator and is not particularly limited. Examples thereof include linear hydrocarbon solvents, cyclic hydrocarbon solvents, a mixed solvent thereof, and the like. Examples of the linear hydrocarbon solvents include C₄ to C₆ linear alkanes and alkenes such as n-butane, isobutane, 1-butene, isobutylene, trans-2-butene, cis-2-butene, 1-pentene, trans-2-pentene, cis-2-pentene, n-pentane, isopentane, neo-pentane, and n-hexane; and the like. Examples of the cyclic hydrocarbon solvents include aromatic compounds such as benzene, toluene, and xylene; alicyclic hydrocarbon compounds such as cyclopentane and cyclohexane; and the like. These solvents may be used alone or in combination as a mixture.

Although not particularly limited, the amount of the solvent to be used is set such that the content of the total block copolymers in the solution after the polymerization reaction is preferably 5 to 60% by weight, more preferably 10 to 55% by weight, still more preferably 20 to 50% by weight.

During production of the hydrogenated block copolymer composition, a Lewis base compound may be added to the reaction system to control the structures of the polymer blocks in each of the block copolymers. Examples of the Lewis base compound include ethers such as tetrahydrofuran, dibutyl ether, diethyl ether, dioxane, ethylene glycol dimethyl ether, ethylene glycol dibutyl ether, diethylene glycol dimethyl ether, and diethylene glycol dibutyl ether; tertiary amines such as tetramethylethylenediamine, trimethylamine, triethylamine, pyridine, and quinuclidine; alkali metal alkoxides such as potassium t-amyloxide and potassium t-butyloxide; phosphines such as triphenylphosphine; and the like. These Lewis base compounds may be used alone or in combination as a mixture.

During the production of the hydrogenated block copolymer composition, the Lewis base compound can be added at any timing, which may be appropriately determined according to the structures of the block copolymers. For example, the Lewis base compound may be preliminarily added before polymerization is started, or may be added after the polymer blocks are partially polymerized. Furthermore, the Lewis base compound may be preliminarily added before polymerization is started, and may be further added after the polymer blocks are partially polymerized.

The polymerization reaction temperature is preferably 10 to 150°C, more preferably 30 to 130°C, still more preferably 40 to 90°C, and the polymerization time is preferably 48 hours or less, more preferably 0.5 to 10 hours. The polymerization pressure is not particularly limited as long as it is controlled within the range of pressure enough to maintain the monomers and the solvent in a liquid phase at a polymerization temperature.

The solution containing a terminally active aromatic vinyl polymer can be prepared by polymerizing the aromatic vinyl monomer in the solvent in the presence of the polymerization initiator under such conditions. Thus, the terminally active aromatic vinyl polymer prepared in the step (1) constitutes the aromatic vinyl polymer block Ar1^{a} having a relatively small weight average molecular weight for the hydrogenated block copolymer A and any one of the aromatic vinyl polymer blocks Ar1^{b} and Ar2^{b} (i.e., Ar1^{b} or Ar2^{b}) for the hydrogenated block copolymer B, the hydrogenated block copolymer A and the hydrogenated block copolymer B constituting the hydrogenated block copolymer composition. For this reason, the polymerization conditions in the step (1) including the amount of the aromatic vinyl monomer may be determined according to the target weight average molecular weights of these polymer blocks.

### <Step (2)>

Then, in the step (2), a solution containing a terminally active aromatic vinyl-conjugated diene block copolymer is prepared by adding a conjugated diene monomer to the solution containing a terminally active aromatic vinyl polymer prepared in the step (1), and polymerizing the conjugated diene monomer.

In the step (2), as a result of addition of the conjugated diene monomer to the solution containing a terminally active aromatic vinyl polymer prepared in the step (1), a conjugated diene polymer chain is formed from the active terminal, thereby preparing the solution containing a terminally active aromatic vinyl-conjugated diene block copolymer.

The conjugated diene polymer chain formed in the step (2) (conjugated diene block constituting the terminally active aromatic vinyl-conjugated diene block copolymer prepared in the step (2)) will form the hydrogenated polymer block HD^{a} of the conjugated diene polymer in the hydrogenated block copolymer A and the hydrogenated polymer block HD^{b} of the conjugated diene polymer in the hydrogenated block copolymer B. For this reason, the polymerization conditions in the step (2) including the amount of the conjugated diene polymer may be determined according to the target weight average molecular weights of these polymer blocks, and the like (for example, the polymerization conditions may be determined in the ranges described in the step (1)).

### <Step (3)>

Then, in the step (3), a solution containing a terminally active aromatic vinyl-conjugated diene-aromatic vinyl block copolymer is prepared by adding an aromatic vinyl monomer to the solution containing a terminally active aromatic vinyl-conjugated diene block copolymer prepared in the step (2), and polymerizing the aromatic vinyl monomer.

In the step (3), as a result of addition of the aromatic vinyl monomer to the solution containing a terminally active aromatic vinyl-conjugated diene block copolymer prepared in the step (2), an aromatic vinyl polymer chain is formed from the active terminal, thereby preparing the solution containing a terminally active aromatic vinyl-conjugated diene-aromatic vinyl block copolymer.

The aromatic vinyl polymer chain formed in the step (3) (aromatic vinyl block in the terminally active aromatic vinyl-conjugated diene-aromatic vinyl block copolymer prepared in the step (3)) will form one of the aromatic vinyl polymer blocks Ar1^{b} and Ar2^{b} for the hydrogenated block copolymer B (i.e., Ar1^{b} or Ar2^{b} which is a block different from that formed in the step (1), for example, if the polymer chain forms Ar1^{b} in the step (1), Ar2^{b} is the corresponding block) . For this reason, the polymerization conditions in the step (3) including the amount of the aromatic vinyl monomer may be determined according to the target weight average molecular weight of such a polymer block (for example, the polymerization conditions may be determined in the ranges described in the step (1)).

### <Step (4)>

Then, in the step (4), a solution containing a block copolymer B' is prepared by adding a polymerization terminator to the solution containing a terminally active aromatic vinyl-conjugated diene-aromatic vinyl block copolymer, which is prepared in the step (3), in an amount of less than 1 molar equivalent relative to the active terminal of the terminally active aromatic vinyl-conjugated diene-aromatic vinyl block copolymer to deactivate a portion of the active terminal.

The block copolymer B' prepared in the step (4) is a block copolymer before hydrogenation for preparing the hydrogenated block copolymer B.

The polymerization terminator can be any compound which can react with the active terminal to deactivate the active terminal and to be no longer reactive with other active terminals after having reacted with one active terminal, and preferred polymerization terminators are compounds not containing a halogen atom. Among these, particularly preferred are those which generate a metal alkoxide, a metal aryloxide, or a metal hydroxide when reacting with the active terminals. Specific examples of the polymerization terminator include water; monohydric alcohols such as methanol and ethanol; monohydric phenols such as phenol and cresol; and the like.

The amount of the polymerization terminator to be used may be determined according to the proportions of the hydrogenated block copolymer A and the hydrogenated block copolymer B constituting the hydrogenated block copolymer composition, and is not particularly limited as long as it is less than 1 molar equivalent relative to the active terminal of the polymer. The amount of the polymerization terminator to be used is in the range of preferably 0.18 to 0.91 molar equivalents, more preferably 0.35 to 0.80 molar equivalents relative to the active terminal of the polymer.

Thus, in the step (4), as a result of addition of the polymerization terminator to the solution containing a terminally active aromatic vinyl-conjugated diene-aromatic vinyl block copolymer in an amount of less than 1 molar equivalent relative to the active terminal thereof, a portion of the active terminal of the terminally active aromatic vinyl-conjugated diene-aromatic vinyl block copolymer is deactivated, and thus, the copolymer having the deactivated active terminal corresponds to the block copolymer B' before hydrogenation for forming the hydrogenated block copolymer B. The residual terminally active aromatic vinyl-conjugated diene-aromatic vinyl block copolymer without reacting with the polymerization terminator is left unreacted in the solution while it maintains the active terminal.

### <Step (5)>

Then, in the step (5), a solution containing the block copolymer B' and a block copolymer A' is prepared by adding an aromatic vinyl monomer to the solution containing a block copolymer B' prepared in the step (4) and polymerizing the aromatic vinyl monomer.

In the step (5), after the aromatic vinyl monomer is added to the solution prepared in the step (4), the aromatic vinyl monomer is further polymerized to extend the aromatic vinyl polymer chain having the active terminal in the residual terminally active aromatic vinyl-conjugated diene-aromatic vinyl block copolymer without reacting with the polymerization terminator. Thereby, the block copolymer A' is prepared. The block copolymer A' is an aromatic vinyl-conjugated diene-aromatic vinyl block copolymer prepared through extension of the aromatic vinyl polymer chain, and will form a block copolymer before hydrogenation for preparing the hydrogenated block copolymer A.

At this time, the aromatic vinyl polymer chain extended in the step (5) will form the aromatic vinyl polymer block Ar2^{a} having a relatively large weight average molecular weight in the hydrogenated block copolymer A in the hydrogenated block copolymer composition. For this reason, the polymerization conditions in the step (5) including the amount of the aromatic vinyl monomer may be determined according to the target weight average molecular weight of such an aromatic vinyl polymer block Ar2^{a} (for example, the polymerization conditions may be determined in the ranges described in the step (1)).

### <Step (6)>

Then, in the step (6), a solution containing a hydrogenated block copolymer B and a hydrogenated block copolymer A is prepared by hydrogenating the solution containing the block copolymer B' and the block copolymer A' prepared in the step (5).

The solution containing the block copolymer B' and the block copolymer A' can be hydrogenated by any method. Examples thereof include a method of bringing the solution containing the block copolymer B' and the block copolymer A' into contact with hydrogen in the presence of a hydrogenation catalyst, and the like.

Examples of the hydrogenation catalyst include, but should not be limited to, Ziegler catalysts such as heterogeneous supported catalysts composed of a metal such as Ni, Pt, Pd, or Ru supported on a carrier such as carbon, silica, alumina, or diatomite in combination with reducing agents such as an organic or acetylacetone salt of Ni, Co, Fe, or Cr and organic Al; organic complex catalysts such as organic metal compounds of Ru, Rh, and the like; homogeneous catalysts such as a titanocene compound in combination with organic Li, organic Al, or organic Mg as a reducing agent; and the like. Among these, Ziegler catalysts are preferred.

Hydrogenation can be performed according to the methods disclosed in JP S42-8704 B, JP S43-6636 B, JP S59-133203 A, JP S60-220147 A, and the like.

Although the conditions for the hydrogenation may be selected according to the hydrogenation ratio of olefins in the polymer components constituting the hydrogenated block copolymer composition, the hydrogenation temperature is preferably 0 to 200°C, more preferably 30 to 150°C. The pressure of hydrogen used in the hydrogenation is preferably 0.1 to 15 MPa, more preferably 0.2 to 10 MPa, still more preferably 0.3 to 5 MPa, and the hydrogenation time is preferably 3 minutes to 10 hours, more preferably 10 minutes to 5 hours. The hydrogenation may be a batch process, a continuous process, or a combination thereof.

### <Step (7)>

Then, in the step (7), the target hydrogenated block copolymer composition is recovered from the solution containing a hydrogenated block copolymer B and a hydrogenated block copolymer A prepared in the step (6).

The recovery may be performed according to a normal method, and the method for recovery is not particularly limited. For example, after the reaction is completed, a polymerization terminator is optionally added to deactivate the active terminal of the terminally active polymer, and further, additives such as an antioxidant are optionally added; thereafter, the solution is treated by a known solvent method such as direct drying or steam stripping. Thereby, the target hydrogenated block copolymer composition can be recovered. In this step, the polymerization terminator described above can be used.

If the hydrogenated block copolymer composition is recovered as a slurry by steam stripping or the like, preferably, the slurry is dehydrated using any dehydrating machine such as an extruder squeezer, and the hydrogenated block copolymer composition in the form of crumbs is recovered. Preferably, the recovered crumbs are dried using any dryer such as a band dryer or an expansion extrusion dryer. The hydrogenated block copolymer composition prepared as above may be processed into pellets or the like according to a normal method before use.

It is preferred that the hydrogenated block copolymer composition in the form of solids (pellets, crumbs, or the like) be used after the water content in the hydrogenated block copolymer composition in the form of solids is reduced using a dryer such as a hopper dryer, a hot air circulating shelf-type dryer, a shelf-type vacuum dryer, or a stirring vacuum dryer. The drying conditions at this time are not particularly limited as long as the target water content can be reached, and may be set according to the water content to be reduced and the type of the dryer. Usually, the drying temperature is set in the range of 40 to 90°C and the drying time is set in the range of 1 to 24 hours.

The method for producing the hydrogenated block copolymer composition described above can provide a target hydrogenated block copolymer composition with productivity higher than that in the case where hydrogenated block copolymers are separately prepared and mixed, because the hydrogenated block copolymer A and the hydrogenated block copolymer B can be continuously prepared in the same reaction vessel.

During production of the hydrogenated block copolymer composition according to the present invention, the above-described suitable production method (the production method comprising the steps (1) to (7)) may be replaced by a method for producing a hydrogenated block copolymer composition, which comprises steps (1a) to (6a) of:
(1a): preparing a solution containing a terminally active aromatic vinyl polymer by polymerizing an aromatic vinyl monomer in a solvent in the presence of a polymerization initiator;
(2a): preparing a solution containing a terminally active aromatic vinyl-conjugated diene block copolymer by adding a conjugated diene monomer to the solution containing a terminally active aromatic vinyl polymer prepared in the step (1a), and polymerizing the conjugated diene monomer;
(3a): preparing a solution containing a block copolymer B' by adding a bifunctional coupling agent to the solution containing a terminally active aromatic vinyl-conjugated diene block copolymer, which is prepared in the step (2a), in an amount such that the total amount of the functional groups is less than 1 molar equivalent relative to the active terminal thereof, to couple a portion of the terminally active aromatic vinyl-conjugated diene block copolymer;
(4a): preparing a solution containing the block copolymer B' and a block copolymer A' by adding an aromatic vinyl monomer to the solution containing the block copolymer B' prepared in the step (3a), and polymerizing the aromatic vinyl monomer;
(5a): preparing a solution containing a hydrogenated block copolymer B and a hydrogenated block copolymer A by hydrogenating the solution containing the block copolymer B' and a block copolymer A' prepared in the step (4a); and
(6a): recovering a hydrogenated block copolymer composition from the solution containing a hydrogenated block copolymer B and a hydrogenated block copolymer A prepared in the step (5a).

### <Steps (1a) and (2a)>

The steps (1a) and (2a) are the same as the steps (1) and (2), and the same conditions can be used.

### <Step (3a)>

In the step (3a), a solution containing a block copolymer B' is prepared by adding a bifunctional coupling agent to the solution containing a terminally active aromatic vinyl-conjugated diene block copolymer, which is prepared in the step (2a), in an amount such that the total amount of the functional groups is less than 1 molar equivalent relative to the active terminal thereof, to couple a portion of the terminally active aromatic vinyl-conjugated diene block copolymer.

The block copolymer B' prepared in the step (3a) will form a block copolymer before hydrogenation for forming the hydrogenated block copolymer B.

The bifunctional coupling agent may be any compound having two functional groups reactive with the active terminal, and examples thereof include, but should not be limited to, bifunctional halogenated silanes such as dichlorosilane, monomethyldichlorosilane, and dimethyldichlorosilane; bifunctional halogenated alkanes such as dichloroethanes, dibromoethane, methylene chloride, and dibromomethane; bifunctional halogenated tin compounds such as dichlorotin, monomethyldichlorotin, dimethyldichlorotin, monoethyldichlorotin, diethyldichlorotin, monobutyldichlorotin, and dibutyldichlorotin; and the like.

The amount of the bifunctional coupling agent to be used may be determined according to the proportions of the hydrogenated block copolymer A and the hydrogenated block copolymer B constituting the hydrogenated block copolymer composition.

Thus, in the step (3a), as a result of addition of the bifunctional coupling agent to the solution containing a terminally active aromatic vinyl-conjugated diene block copolymer in an amount such that the total amount of the functional groups is less than 1 molar equivalent relative to the active terminal thereof, a portion of the terminally active aromatic vinyl-conjugated diene block copolymer is coupled to form a block copolymer B' before hydrogenation for forming the hydrogenated block copolymer B. The residual terminally active aromatic vinyl-conjugated diene block copolymer without reacting with the bifunctional coupling agent is left unreacted in the solution while it maintains the active terminals.

### <Step (4a)>

Then, in the step (4a), a solution containing the block copolymer B' and a block copolymer A' is prepared by adding an aromatic vinyl monomer to the solution containing a block copolymer B' prepared in the step (3a), and polymerizing the aromatic vinyl monomer.

In the step (4a), as a result of addition of the aromatic vinyl monomer to the solution prepared in the step (3a), the aromatic vinyl monomer is polymerized to extend the aromatic vinyl polymer chain having the active terminal in the residual terminally active aromatic vinyl-conjugated diene block copolymer without reacting with the bifunctional coupling agent. Thereby, a block copolymer A' is prepared. The block copolymer A' will form a block copolymer before hydrogenation for forming the hydrogenated block copolymer A.

At this time, the aromatic vinyl polymer chain formed in the step (4a) will form the aromatic vinyl polymer block Ar2^{a} having a relatively large weight average molecular weight in the hydrogenated block copolymer A in the hydrogenated block copolymer composition. For this reason, the polymerization conditions in the step (4a) including the amount of the aromatic vinyl monomer may be determined according to the target weight average molecular weight of the aromatic vinyl polymer block Ar2^{a}, or the like (for example, the polymerization conditions may be determined in the ranges described in the step (1)).

### <Steps (5a) and (6a)>

Then, the hydrogenated block copolymer composition used in the present invention can be prepared through the operations in the steps (5a) and (6a) described above from the solution containing the block copolymer B' and the block copolymer A' prepared in the step (4a). The steps (5a) and (6a) described above are the same as the steps (6) and (7) described above, and the same conditions can be used.

Additives that are used as necessary, such as an antioxidant, can be added at any timing to the hydrogenated block copolymer composition produced above. The method for adding the additives is not particularly limited, and examples thereof include a method of subjecting the components to melt mixing under heat using a kneading apparatus such as a Banbury mixer, a kneader, a Labo plastomill, a single screw extruder, a twin screw extruder, or the like; and a method of dissolving the components in a solvent to prepare a solution, and then removing the solvent by heating or the like. Alternatively, the hydrogenated block copolymer composition can be obtained by preparing a solution containing a block copolymer B' before hydrogenation for forming the hydrogenated block copolymer B and a block copolymer A' before hydrogenation for forming the hydrogenated block copolymer A, adding additives thereto, and subjecting the mixture to a hydrogenation step, or can be obtained by preparing a solution containing a hydrogenated block copolymer B and a hydrogenated block copolymer A, and adding additives thereto.

### (Method for foaming hydrogenated block copolymer composition)

The foam body according to the present invention can be produced by foaming the hydrogenated block copolymer composition produced above.

The foam body according to the present invention can be produced by a method of mixing a hydrogenated block copolymer composition and a physical foaming agent, and then transforming the physical foaming agent dissolved or dispersed in the hydrogenated block copolymer composition into a gas phase.

The physical foaming agent is a liquefied gas or a supercritical fluid, and can be transformed into a gas phase by reducing pressure or heating. Examples of the physical foaming agent include aliphatic hydrocarbons such as butane, alicyclic hydrocarbons such as cyclobutane, inorganic gases such as carbon dioxide, nitrogen, or air, and the like. Among these, supercritical fluids are preferred, supercritical fluids of carbon dioxide and nitrogen are more preferred, and a supercritical fluid of nitrogen is further more preferred.

The foam body according to the present invention can be produced, for example, using an injection molding machine. Specifically, a thermoplastic component in the hydrogenated block copolymer composition is plasticized in a cylinder, a physical foaming agent is injected into the cylinder to dissolve or disperse the physical foaming agent in the plasticized component in the hydrogenated block copolymer composition, then the resulting mixture is injected into a mold, and the physical foaming agent in the mixture is transformed into a gas phase after the injection or concurrent therewith to produce a foam body. Specifically, from the viewpoint of capability of producing a foam body in which bubbles with a size of the order of microns are uniformly dispersed, it is preferred that an injection molding machine be used and a supercritical fluid be used as a physical foaming agent.

Examples of the injection-molding foaming method that transforms a physical foaming agent in the mixture into a gas phase after the injection or concurrent therewith include a short shot method, a full shot method, a core-back method, and the like. Among these, from the viewpoint of capability of uniformly generating bubbles in the foam body, a core-back method is preferred. The core-back method is a method of using a mold which is capable of enlarging the cavity volume thereof, and enlarging the cavity volume of the mold after injection molding or concurrent therewith to transform a physical foaming agent into a gas phase.

The injection molding conditions are not particularly limited as long as injection molding can be performed while a physical foaming agent is dissolved or dispersed in the plasticized component in the hydrogenated block copolymer composition.

Alternatively, in the production method described above, various melt molding machines other than the injection molding machine can be used.

The foam body according to the present invention can also be produced by a method of mixing a hydrogenated block copolymer composition and a chemical foaming agent, and then foaming the chemical foaming agent dispersed in the hydrogenated block copolymer composition. The chemical foaming agent is a foaming agent that produces gases owing to a chemical reaction or thermal decomposition. Examples of the chemical foaming agent include inorganic chemical foaming agents such as sodium bicarbonate and ammonium carbonate, organic chemical foaming agents such as azodicarbonamide, and the like.

The foam body according to the present invention has low initial elastic modulus and excellent cushioning properties, and thus can be suitably used as cushioning materials. Specifically, according to the present invention, low initial elastic modulus can be achieved, and concurrently the compressive stress σ_{0.4} at a strain of 0.4 can be preferably 0.2 to 0.8 MPa, more preferably 0.3 to 0.7 MPa, and the strain ε_{1MPa} at a compressive stress of 1 MPa can be preferably 0.45 to 0.85, more preferably 0.55 to 0.75. When the initial elastic modulus is low and the compressive stress σ_{0.4} at a strain of 0.4 and the strain ε_{1MPa} at a compressive stress of 1 MPa fall within these ranges, the foam body can be suitably used as shoe sole members or cushioning materials for batteries, and particularly suitably as shoe sole members.

For example, in the case where the foam body according to the present invention is used as a shoe sole member, when a person puts on shoes, the shoes feel soft and comfortable in their feet, and when relatively high load is applied by walking, exercise, or the like, excessive deformation and excessive repulsion do not occur.

In addition, in the case where the foam body according to the present invention is used as cushioning materials for batteries, excessive repulsion does not occur even if relatively small deformation such as expansion of battery cells occur, and thus, for example, deterioration of the container of a battery or the like over time is suppressed. Further, when relatively high load is applied, suitable cushioning action is exerted.

The foam body according to the present invention can be used for various applications in addition to the above-described applications. For example, it can be preferably used for sports gear applications, for example, for inflatable balls, gloves for sprots (e.g., football gloves or boxing gloves), components of a golf ball, rackets, protective elements (e.g., jackets, interior elements of a helmet, shells), and the like. Furthermore, it can be preferably used for various applications to various parts of apparatuses and machines such as acoustic apparatuses or business machines; applications to various parts of household appliances; those to various building materials of condominiums or the like; those in the transport industry, for example, rail sole parts of a train, automobile parts, or the like; those in the electric and electronics industries; those in the manufacturing industries; and the like.

### EXAMPLES

Hereinafter, the present invention will be more specifically described by way of Examples and Comparative Examples, but the present invention will not be limited only to these Examples. To be noted, "parts" and "%" are weight-based unless otherwise specified.

The following test methods were performed in Examples and Comparative Examples.

### [Weight average molecular weight, molecular weight distribution]

A chart based on the molecular weight against polystyrene standards was obtained by high performance liquid chromatography where tetrahydrofuran at a flow rate of 0.35 ml/min was used as a carrier, and the weight average molecular weight and the molecular weight distribution were determined based on the obtained chart. The measurement was performed using an apparatus HLC8320 available from Tosoh Corporation, three columns (Shodex (registered trademark) KF-404HQ available from Showa Denko K.K.) connected in series (column temperature: 40°C), and a differential refractometer and an ultraviolet detector as detectors. The molecular weight was calibrated against 12 points of polystyrene standards (500 to 3,000,000) available from Polymer Laboratories Ltd.

### [Weight ratio of block copolymers in (hydrogenated) block copolymer composition]

The weight ratio of the block copolymers was determined from the ratio of the areas of the peaks corresponding to the block copolymers in a chart obtained by high performance liquid chromatography.

### [Weight average molecular weights of styrene polymer blocks in (hydrogenated) block copolymer]

According to the method described in Rubber Chem. Technol., 45, 1295 (1972), the isoprene polymer block of each of the (hydrogenated) block copolymers was decomposed by reacting the (hydrogenated) block copolymers with ozone, followed by reduction with lithium aluminum hydride.

Specifically, the following procedure was performed. Namely, 300 mg of a sample was dissolved in a reaction vessel containing 100 ml of dichloromethane treated with a molecular sieve. This reaction vessel was placed into a cooling tank, and was cooled to -25°C. Thereafter, while oxygen was flowing into the reaction vessel at a flow rate of 170 ml/min, ozone generated by an ozone generator was introduced. After 30 minutes had passed from the start of the reaction, it was confirmed that the reaction had completed by introducing the gas flowing out of the reaction vessel into a potassium iodide aqueous solution. In the next step, 50 ml of diethyl ether and 470 mg of lithium aluminum hydride were placed into another reaction vessel purged with nitrogen. While the reaction vessel was being cooled with iced water, the solution reacted with ozone was slowly added dropwise to the reaction vessel. Thereafter, the reaction vessel was placed into a water bath, and was gradually heated, and the solution was refluxed at 40°C for 30 minutes. Subsequently, while the solution was being stirred, diluted hydrochloric acid was added dropwise to the reaction vessel in small portions. The addition was continued until generation of hydrogen was hardly observed. After this reaction, a solid product formed in the solution was separated through filtration. The solid product was extracted with 100 ml of diethyl ether for 10 minutes. The extract and the filtrate obtained from the filtration were combined, and the solvent was distilled off to yield a solid sample. The resulting sample as above was measured for the weight average molecular weights according to the above-described weight average molecular weight measuring method, and the values were defined as the weight average molecular weights of the styrene polymer blocks.

### [Weight average molecular weight of (hydrogenated) isoprene polymer block in (hydrogenated) block copolymer]

For each of the (hydrogenated) block copolymers, the weight average molecular weight of the styrene polymer block was subtracted from the weight average molecular weight of the corresponding block copolymer determined as described above, and the weight average molecular weight of the (hydrogenated) isoprene polymer block was determined based on the calculated value.

### [Content of styrene units in (hydrogenated) block copolymer]

The content of styrene units was determined based on the ratio of intensities detected by the differential refractometer and the ultraviolet detector in the measurement by high performance liquid chromatography. To be noted, copolymers having different contents of styrene units were preliminarily prepared, and were used to create a calibration curve.

### [Content of styrene units in entire (hydrogenated) block copolymer composition]

The content of styrene units in an entire (hydrogenated) block copolymer composition was determined based on ¹H-NMR measurement using deuterochloroform as a solvent.

### [Vinyl bond content in (hydrogenated) isoprene polymer block]

The vinyl bond content in a (hydrogenated) isoprene polymer block was determined based on ¹H-NMR measurement using deuterochloroform as a solvent.

### [Hydrogenation ratio (mol%) of olefins in (hydrogenated) block copolymer composition]

For each of the block copolymer compositions before hydrogenation and the hydrogenated block copolymer compositions after hydrogenation, the olefin content was determined by ¹H-NMR spectrum measurement using deuterochloroform as a solvent. Based on the difference between the olefin contents before and after hydrogenation, the hydrogenation ratio (mol%) of olefins was calculated.

In the ¹H-NMR spectrum measurement, deuterochloroform was used as a solvent, and an NMR analyzer JMN-AL series AL400 (available from JEOL, Ltd.) was used.

In Examples and Comparative Examples, the block copolymer compositions before hydrogenation and the hydrogenated block copolymer composition after hydrogenation both contained only isoprene units as olefin-derived monomer units. Thus, the hydrogenation ratio of isoprene was determined in the measurement, and this ratio was defined as the hydrogenation ratio of olefins.

### [Iodine value of (hydrogenated) block copolymer composition]

The iodine value of each of the (hydrogenated) block copolymer compositions was measured according to JIS K0070.

### [Viscosity retention]

Each of the hydrogenated block copolymer compositions was subjected to a thermal degradation test (170°C × 1 hour; in the presence of air) to measure the melt viscosity before the thermal degradation test and that after the thermal degradation test, and the viscosity retention was determined from the following expression. A higher viscosity retention is determined as higher thermal stability of the hydrogenated block copolymer composition, further reduced thermal degradation of the hydrogenated block copolymer composition during foam molding, and more uniform quality of a foam body to be obtained. Viscosity retention (%) = (melt viscosity after thermal degradation test/melt viscosity before thermal degradation test) × 100

The melt viscosity was measured using a Flowtester CFT-500C (available from SHIMADZU Corporation) at a temperature of 180°C under a load of 100 kgf/cm² with a die having a shape of 1 mmφ × 10 mm.

### [Specific gravity and porosity of foam body]

The specific gravity (apparent density) of a foam body was measured according to JIS K 7311:1995 (underwater displacement method). In addition, the specific gravity (true density) of a hydrogenated block copolymer composition was measured in the same manner. Then, the porosity of the foam body was calculated from the specific gravity (apparent density) of the foam body and the specific gravity (true density) of the hydrogenated block copolymer composition.

### [Initial elastic modulus E₀, compressive stress σ_{0.4} at strain of 0.4, strain ε_{1MPa} at compressive stress of 1 MPa]

A foam body was cut into a cylindrical sample with 29 mm diameter × 12 mm height, and this sample was compressed at a strain rate of 0.1 mm/sec at a temperature of 23°C using an Autograph Precision Universal Testing Machine (available from SHIMADZU Corporation, product name: AG-50kN IS Model MS) to obtain a compressive stress-strain curve. From the resulting compressive stress-strain curve, the initial elastic modulus Eo was determined by linear approximation of the region within a strain range of 0 to 0.1. Then, from the resulting compressive stress-strain curve, compressive stress σ_{0.4} at a strain of 0.4 and strain ε_{1MPa} at a compressive stress of 1 MPa were determined.

### [Example 1]

### (1) Preparation of block copolymer composition before hydrogenation

56.6 kg of cyclohexane, 505 mmol of dibutyl ether, and 1.22 kg of styrene were added to a pressure-resistant reactor. While the system was being stirred at 40°C, 270.6 mmol of n-butyllithium (1.6 M solution) was added. After the addition was completed, the system was heated to 50°C, and polymerized for 1 hour (first stage of polymerization). The polymerization conversion ratio of styrene at this time was 100% by weight.

Subsequently, while the temperature was being controlled to keep 50 to 60°C, 6.49 kg of isoprene was continuously added to the reactor over 1 hour. The addition of isoprene was completed, followed by polymerization for another one hour (second stage of polymerization). The polymerization conversion ratio of isoprene at this time was 100%.

In the next step, while the temperature was being controlled to keep 50 to 60°C, 1.22 kg of styrene was continuously added over 1 hour. The addition of styrene was completed, followed by polymerization for another one hour to prepare a solution containing a terminally active styrene-isoprene-styrene triblock copolymer (third stage of polymerization). The polymerization conversion ratio of styrene at this time was 100%.

In the next step, 195 mmol of methanol as a polymerization terminator was added and mixed to deactivate a portion of the active terminal of the terminally active styrene-isoprene-styrene triblock copolymer, thereby preparing a solution containing a styrene-isoprene-styrene triblock copolymer which corresponds to a block copolymer B' for preparing a hydrogenated block copolymer B.

Thereafter, while the temperature was further successively being controlled to keep 50 to 60°C, 1.06 kg of styrene was continuously added over 1 hour. The addition of styrene was completed, followed by polymerization for another one hour to prepare a solution containing a terminally active styrene-isoprene-styrene triblock copolymer which corresponds to a block copolymer A' for preparing a hydrogenated block copolymer A (fourth stage of polymerization). The polymerization conversion ratio of styrene at this time was 100%.

Finally, the active terminal of the terminally active styrene-isoprene-styrene triblock copolymer was completely deactivated by adding and mixing 345 mmol of methanol as a polymerization terminator, to complete the polymerization reaction. Thereby, a solution containing a block copolymer composition before hydrogenation was prepared.

The amounts of the reagents used in the reactions are summarized in Table 1.

### (2) Hydrogenation of block copolymer composition before hydrogenation

The resulting solution containing a block copolymer composition before hydrogenation was hydrogenated to prepare a solution containing a hydrogenated block copolymer composition. After a Ni(AcAc)₂-TIBAL catalyst as a hydrogenating catalyst was added to the solution containing a block copolymer composition before hydrogenation obtained above in a proportion of 0.5% by weight relative to the block copolymer composition before hydrogenation, the hydrogenation reaction was performed at a hydrogen pressure of 3 MPa and a reaction temperature of 80°C for a reaction time of 3 hours.

A portion of the solution containing a hydrogenated block copolymer composition obtained as described above was extracted, and the weight average molecular weight of each block copolymer contained in the composition, the weight ratio of each block copolymer in the composition, the weight average molecular weight of the styrene polymer block in each block copolymer, the weight average molecular weight of the isoprene polymer block in each block copolymer, the styrene unit content in each block copolymer, the styrene unit content in the block copolymer composition (entire), the vinyl bond content in the isoprene polymer block in each block copolymer, and the hydrogenation ratio of olefins were determined. These values are summarized in Table 2.

### (3) Recovery of hydrogenated block copolymer composition

0.3 Parts of 2,6-di-t-butyl-p-cresol as an antioxidant was added to and mixed with 100 parts of the solution of a hydrogenated block copolymer composition obtained as described above. The mixed solution was added dropwise in small portions to hot water heated to 85 to 95°C, and the solvent was volatilized to yield a precipitate. The resulting precipitate was crushed, and was dried with hot air at 85°C to recover a hydrogenated block copolymer composition in the form of crumbs.

Next, the resulting hydrogenated block copolymer composition in the form of crumbs was fed to a single screw extruder equipped with an underwater hot cutter at the leading end of the extruder, and was formed into cylindrical pellets having an average diameter of about 5 mm and an average length of about 5 mm. This pellets of hydrogenated block copolymer composition were put into a hopper dryer heated to 60°C, and was dried for 10 hours under dry air flow at 60°C. The iodine value of the resulting hydrogenated block copolymer composition was measured. These results are summarized in Table 2.

### (4) Production of foam body

Using a molding machine described below, the resulting hydrogenated block copolymer composition was foam molded to produce a foam body with a dimension of 170 mm × 170 mm × 13 mm. The molding machine used was an injection molding machine ARBURG ALLROUNDER 520A 150T equipped with Trexel Series II System capable of injecting a physical inflating agent using MuCell (registered trademark) technology and a die opening system (core-back technology).

The following operation parameters were used:
- Sheath temperature (°C): 230°C
- Die dimensions (mm): 170 × 170 × 4
- Injection rate: 150 mm/s
- Maintenance time before opening die: 6 to 10 seconds
- Maintenance pressure: 300 MPa
- Cooling time (s): 70 s
- Die temperature: 40°C
- Die opening width: adjusted to produce a foam body with a thickness of 13 mm (adjustable up to 30 mm)
- Die opening rate: 0.28 mm/s

A foaming agent was introduced in an amount of 1.5% by weight relative to the weight of the hydrogenated block copolymer composition. Nitrogen (N₂) was used as the foaming agent.

### [Example 2]

A foam body was produced in the same manner as in Example 1 except that the amounts of the reagents used in the reactions were changed as shown in Table 1, and the reaction time was changed from 3 hours to 0.5 hours. Then, the measurements and the evaluations were performed in the same manner as in Example 1. The results are summarized in Table 2.

### [Example 3]

A foam body was produced in the same manner as in Example 1 except that the amounts of the reagents used in the reactions were changed as shown in Table 1, and the reaction time in hydrogenation was changed from 3 hours to 0.2 hours. Then, the measurements and the evaluations were performed in the same manner as in Example 1. The results are summarized in Table 2.

### [Example 4]

A foam body was produced in the same manner as in Example 1 except that the amounts of the reagents used in the reactions were changed as shown in Table 1. Then, the measurements and the evaluations were performed in the same manner as in Example 1. The results are summarized in Table 2.

### [Example 5]

### (1) Preparation of block copolymer composition before hydrogenation

56.6 kg of cyclohexane, 769 mmol of dibutyl ether, and 1.29 kg of styrene were added to a pressure-resistant reactor. While the system was being stirred at 40°C, 412.4 mmol of n-butyllithium (1.6 M solution) was added. After the addition was completed, the system was heated to 50°C and polymerized for 1 hour (first stage of polymerization). The polymerization conversion ratio of styrene at this time was 100% by weight.

Subsequently, while the temperature was being controlled to keep 50 to 60°C, 7.30 kg of isoprene was continuously added to the reactor over 1 hour. The addition of isoprene was completed, followed by polymerization for another one hour (second stage of polymerization). The polymerization conversion ratio of isoprene at this time was 100%.

In the next step, 146 mmol of dimethyldichlorosilane as a bifunctional coupling agent was added and mixed to couple a portion of the terminally active styrene-isoprene diblock copolymer, thereby preparing a solution containing a styrene-isoprene-styrene triblock copolymer which corresponds to a block copolymer B' for preparing a hydrogenated block copolymer B.

Thereafter, while the temperature was further successively being controlled to keep 50 to 60°C, 1.41 kg of styrene was continuously added over 1 hour. The addition of styrene was completed, followed by polymerization for another one hour to prepare a solution containing a terminally active styrene-isoprene-styrene triblock copolymer which corresponds to a block copolymer A' for preparing a hydrogenated block copolymer A (third stage of polymerization). The polymerization conversion ratio of styrene at this time was 100%.

Finally, the active terminal of the terminally active styrene-isoprene-styrene triblock copolymers was completely deactivated by adding and mixing 533 mmol of methanol as a polymerization terminator, to complete the polymerization reaction. Thereby, a solution containing a block copolymer composition before hydrogenation was prepared.

The amounts of the reagents used in the reactions are summarized in Table 1.

### (2) Hydrogenation of block copolymer composition before hydrogenation

The resulting solution containing a block copolymer composition before hydrogenation was hydrogenated to prepare a solution containing a hydrogenated block copolymer composition. The hydrogenation was performed under the same conditions as those in Example 1. A portion of the resulting solution containing a hydrogenated block copolymer composition was extracted, and the measurements were performed in the same manner as in Example 1. The results are summarized in Table 2.

### (3) Recovery of hydrogenated block copolymer composition

A hydrogenated block copolymer composition was recovered in the same manner as in Example 1 using the resulting solution containing a hydrogenated block copolymer composition, and the measurements were performed in the same manner as in Example 1. The results are shown in Table 2.

### (4) Production of foam body

A foam body was produced using the resulting hydrogenated block copolymer composition in the same manner as Example 1, and the measurements were performed in the same manner as in Example 1. The results are summarized in Table 2.

### [Example 6]

A foam body was produced in the same manner as in Example 1 except that 2706 mmol of ethylene glycol dibutyl ether was used instead of dibutyl ether. Then, the measurements and the evaluations were performed in the same manner as in Example 1. The results are summarized in Table 2.

### [Comparative Example 1]

A foam body was produced in the same manner as in Example 1 except that the amounts of the reagents used in the reactions were changed as shown in Table 1. Then, the measurements and the evaluations were performed in the same manner as in Example 1. The results are summarized in Table 2. In Comparative Example 1, the fourth stage of polymerization was not performed.

### [Comparative Example 2]

A foam body was produced in the same manner as in Example 1 except that the amounts of the reagents used in the reactions were changed as shown in Table 1, and the hydrogenation was not performed. Then, the measurements and the evaluations were performed in the same manner as in Example 1. The results are summarized in Table 2.

### [Comparative Example 3]

A foam body was produced in the same manner as in Example 1 except that the amounts of the reagents used in the reactions were changed as shown in Table 1. Then, the measurements and the evaluations were performed in the same manner as in Example 1. The results are summarized in Table 2. In Comparative Example 3, the fourth stage of polymerization was not performed.

### [Table 1]

**Table 1**

| | | Example | | | | | | Comparative Example | | |
|---|---|---|---|---|---|---|---|---|---|---|
| | | 1 | 2 | 3 | 4 | 5 | 6 | 1 | 2 | 3 |
| Cyclohexane (kg) | | 56.6 | 56.6 | 56.6 | 56.6 | 56.6 | 56.6 | 56.6 | 56.6 | 56.6 |
| Dibutyl ether (mmol) | | 505 | 392 | 470 | 481 | 769 | - | 530 | 301 | 582 |
| Ethylene glycol dibutyl ether (mmol) | | - | - | - | - | - | 2706 | - | - | - |
| n-Butyllithium (mmol) | | 270.6 | 210.3 | 252 | 258 | 412.4 | 270.6 | 284.2 | 161.6 | 312 |
| Styrene (kg) | [First stage of polymerization] | 1.22 | 1.4 | 1.49 | 1.06 | 1.29 | 1.22 | 1.75 | 1.26 | 1.25 |
| Isoprene (kg) | [Second stage of polymerization] | 6.49 | 6.49 | 3.80 | 5.19 | 7.30 | 6.49 | 6.49 | 6.49 | 7.49 |
| Styrene (kg) | [Third stage of polymerization] | 1.22 | 1.4 | 1.49 | 1.06 | - | 1.22 | 1.75 | 1.26 | 1.25 |
| Methanol (mmol) | [Added after third stage of polymerization] | 195 | 160 | 192 | 150 | - | 195 | - | 113 | - |
| Dimethyldichlorosilane (mmol) | [Added after third stage of polymerization] | - | - | - | - | 146 | - | - | - | |
| Styrene (kg) | [Fourth stage of polymerization] | 1.06 | 0.7 | 3.21 | 2.67 | 1.41 | 1.06 | | 0.97 | |
| Methanol (mmol) | [Added after fourth stage of polymerization] | 345 | 261 | 312 | 366 | 533 | 345 | 568.4 | 210 | 624 |

### [Table 2]

**Table 2**

| | | Example | | | | | | Comparative Example | | |
|---|---|---|---|---|---|---|---|---|---|---|
| | | 1 | 2 | 3 | 4 | 5 | 6 | 1 | 2 | 3 |
| (Hydrogenated) block copolymer A | | | | | | | | | | |
| | Weight average molecular weight of relatively small styrene block (Ar1^{a}) [Mw(Ar1^{a})] | 5000 | 6500 | 6000 | 5200 | 3000 | 5000 | - | 8000 | - |
| | Weight average molecular weight of relatively large styrene block (Ar2^{a}) [Mw(Ar2^{a})] | 25000 | 25000 | 81000 | 48000 | 14000 | 23500 | - | 40000 | - |
| | Mw(Ar2^{a})/Mw(Ar1^{a}) | 5.0 | 3.8 | 13.5 | 9.2 | 4.7 | 4.7 | - | 5.0 | - |
| | Weight average molecular weight of (hydrogenated) isoprene block [Mw(HD^{a})] | 38000 | 48000 | 30000 | 38000 | 29000 | 38000 | - | 64000 | - |
| | Vinyl bond content (%) in isoprene block (before hydrogenation) | 7 | 8 | 8 | 7 | 7 | 68 | - | 8 | - |
| | Styrene unit content (%) in (hydrogenated) block polymer A | 53 | 50 | 76 | 71 | 44 | 53 | - | 52 | - |

| (Hydrogenated) block copolymer B | | | | | | | | | | |
|---|---|---|---|---|---|---|---|---|---|---|
| | Weight average molecular weight of (Hydrogenated) styrene block [Mw(Ar1^{b})=Mw(Ar2^{b})] | 5000 | 6500 | 6000 | 5200 | 3000 | 5000 | 6000 | 8000 | 3500 |
| | Weight average molecular weight of (Hydrogenated) isoprene block [Mw(HD^{b})] | 38000 | 48000 | 30000 | 38000 | 58000 | 38000 | 38000 | 64000 | 43000 |
| | Vinyl bond content (%) in isoprene block (before hydrogenation) | 7 | 8 | 8 | 7 | 7 | 68 | 7 | 8 | 7 |
| | Styrene unit content (%) in (hydrogenated) block polymer B | 27 | 30 | 29 | 33 | 15 | 27 | 35 | 28 | 25 |

| Block copolymer composition (entire) | | | | | | | | | | |
|---|---|---|---|---|---|---|---|---|---|---|
| | Weight average molecular weight | 52000 | 63000 | 68000 | 63000 | 52000 | 71500 | 50000 | 88000 | 50000 |
| | Molecular weight distribution | 1.031 | 1.030 | 1.033 | 1.032 | 1.032 | 1.04 | 1.014 | 1.032 | 1.012 |
| | Styrene unit content (%) | 35 | 35 | 62 | 48 | 27 | 35 | 35 | 35 | 20 |
| | (Hydrogenated) block copolymer A/(hydrogenated) block copolymer B (weight ratio) | 30/70 | 25/75 | 44/56 | 40/60 | 37/63 | 30/70 | - | 30/70 | - |
| | Hydrogenation ratio of olefins (mol%) | 100 | 50 | 20 | 100 | 100 | 100 | 100 | 0 | 100 |
| | Iodine value (gl₂/100g) | 0 | 94.0 | 148.8 | 0 | 0 | 0 | 0 | 241.9 | 0.0 |

| Evaluation of thermal stability | | | | | | | | | | |
|---|---|---|---|---|---|---|---|---|---|---|
| | Viscosity retention (%) after heating at 170°C for 1 hour | 100 | 92 | 88 | 100 | 100 | 100 | 100 | 67 | 100 |

| Evaluation of physical properties of foam molded product | | | | | | | | | | |
|---|---|---|---|---|---|---|---|---|---|---|
| | Specific gravity (g/cm³) | 0.26 | 0.24 | 0.25 | 0.24 | 0.26 | 0.23 | 0.25 | 0.25 | 0.27 |
| | Porosity (% by volume) | 71 | 74 | 74 | 75 | 71 | 75 | 73 | 73 | 70 |
| | Initial elastic modulus E₀ (MPa) | 1.32 | 1.18 | 1.58 | 1.56 | 1.11 | 1.62 | 2.91 | 0.74 | 0.81 |
| | σ_{0.4} (MPa) | 0.38 | 0.31 | 0.51 | 0.53 | 0.34 | 0.44 | 0.42 | 0.14 | 0.19 |
| | ε_{1MPa}(-) | 0.64 | 0.68 | 0.62 | 0.59 | 0.71 | 0.61 | 0.68 | 0.95 | 0.89 |

As shown in Table 2, a foam body in which a hydrogenated block copolymer composition containing a hydrogenated block copolymer A represented by General Formula (A) and a hydrogenated block copolymer B represented by General Formula (B) in a ratio of A/B (weight ratio) = 10/90 to 80/20, wherein the hydrogenation ratio of olefins in the polymer components constituting the hydrogenated block copolymer composition was 10 to 100%, was foamed had low initial elastic modulus E₀, as well as excellent compressive stress σ_{0.4} at a strain of 0.4 and excellent strain ε_{1MPa} at a compressive stress of 1 MPa, that is, the foam body had excellent cushioning properties (Examples 1 to 6).

On the other hand, a foam body containing no hydrogenated block copolymer A represented by General Formula (A) could not ensure both low initial elastic modulus and excellent cushioning properties (Comparative Examples 1 and 3).

Furthermore, when the hydrogenation ratio of olefins was less than 10%, compressive stress σ_{0.4} at a strain of 0.4 was excessively small, and strain ε_{1MPa} at a compressive stress of 1 MPa was excessively large, that is, the foam body was inferior in cushioning properties (Comparative Example 2).

## Claims

1. A foam body in which a hydrogenated block copolymer composition containing a hydrogenated block copolymer A represented by General Formula (A) and a hydrogenated block copolymer B represented by General Formula (B) is foamed,
wherein the weight ratio (A/B) of the hydrogenated block copolymer A to the hydrogenated block copolymer B is 10/90 to 80/20, and
the hydrogenation ratio of olefins in the polymer components constituting the hydrogenated block copolymer composition is 10 to 100%:
Ar1^{a}-HD^{a}-Ar2^{a} (A)
Ar1^{b}-HD^{b}-Ar2^{b} (B)
wherein in General Formulae (A) and (B) above, Ar1^{a}, Ar2^{a}, Ar1^{b}, and Ar2^{b} are each an aromatic vinyl polymer block, HD^{a} and HD^{b} are each a hydrogenated polymer block of a conjugated diene polymer, the ratio (Mw(Ar2^{a})/Mw(Ar1^{a})) of the weight average molecular weight of Ar2^{a} (Mw(Ar2^{a})) to the weight average molecular weight of Ar1^{a} (Mw(Ar1^{a})) is 2.6 to 66, and the ratio (Mw(Ar2^{b})/Mw(Ar1^{b})) of the weight average molecular weight of Ar2^{b} (Mw(Ar2^{b})) to the weight average molecular weight of Ar1^{b} (Mw(Ar1^{b})) is 0.95 to 1.05.

2. The foam body according to claim 1, wherein the proportion of aromatic vinyl monomer units in the total repeating units of the polymer components constituting the hydrogenated block copolymer composition is 10 to 75% by weight.

3. The foam body according to claim 1 or 2, wherein HD^{a} and HD^{b} in General Formula (A) and General Formula (B) above each have a vinyl bond content of 1 to 80 mol%.

4. The foam body according to any one of claims 1 to 3, wherein Ar1^{a}, Ar1^{b}, and Ar2^{b} in General Formula (A) and General Formula (B) above each have a weight average molecular weight in the range of 2,000 to 40,000, and HD^{a} and HD^{b} each have a weight average molecular weight in the range of 10,000 to 300,000.

5. The foam body according to any one of claims 1 to 4, wherein the total weight proportion of the hydrogenated block copolymer A and the hydrogenated block copolymer B in the polymer components constituting the hydrogenated block copolymer composition is 30 to 100% by weight.

6. The foam body according to any one of claims 1 to 5, wherein the weight average molecular weight of the total polymer components constituting the hydrogenated block copolymer composition is 30,000 to 400,000.

7. The foam body according to any one of claims 1 to 6, having an apparent density of 0.1 to 0.7 g/cm³.

8. A cushioning material containing the foam body according to any one of claims 1 to 7.
